# EUROPEAN PATENT SPECIFICATION

(11) **EP 2 644 871 B1**
(45) Date of publication and mention of the grant of the patent: **06.01.2016**
(21) Application number: 10859918.4
(22) Date of filing: 26.11.2010
(51) Int. Cl.: F02D 21/08, F02M 25/07, F02D 41/02, F02D 41/00

(54) **CONTROL DEVICE FOR INTERNAL COMBUSTION ENGINE**
STEUERUNGSVORRICHTUNG FÜR EINEN VERBRENNUNGSMOTOR
DISPOSITIF DE COMMANDE POUR MOTEUR À COMBUSTION INTERNE

(43) Date of publication of application: 02.10.2013
(73) Proprietor: TOYOTA JIDOSHA KABUSHIKI KAISHA, Toyota-shi, Aichi-ken, 471-8571 (JP)
(72) Inventor: KOGO, Tomoyuki, Toyota-shi, Aichi-ken, 471-8571 (JP); OGAWA, Takashi, Toyota-shi, Aichi-ken, 471-8571 (JP); ITO, Katsuhiro, Toyota-shi, Aichi-ken, 471-8571 (JP); IWATA, Kazuyasu, Toyota-shi, Aichi-ken, 471-8571 (JP)
(74) Representative: Kuhnen & Wacker
(86) International application number: PCT/JP2010/071138
(87) International publication number: WO 2012/070148

(56) References cited:
- EP-A1- 1 106 804
- WO-A1-2006/095113
- JP-A- 2005 090 391
- JP-A- 2008 303 837
- JP-A- 2009 221 930
- JP-A- 2010 084 615

## Description

### [TECHNICAL FIELD]

The present invention relates to a control device for an internal combustion engine.

### [BACKGROUND ART]

In an internal combustion engine (in particular, a diesel engine), in order to reduce emissions, an exhaust purification device is provided in an exhaust path. This device has a purification catalyst purifying HC (hydrocarbon), CO (carbon monoxide), and NOx (nitrogen oxide) included in the exhaust gas and has a Diesel Particulate Filter (hereinafter referred to as DPF) collecting Particulate Matters (hereinafter referred to as PM).

As for the exhaust purification device, catalyst composition poisoned by the sulfur oxide included in the exhaust gas is degraded according to the driving of the engine, so that the purification ability of the exhaust gas gradually deteriorates. Also, for example, as for a NOx storage and reduction type purification catalyst, the amount of NOx adsorbed on the purification catalyst is made closer to saturation by the driving of the engine. Therefore, the air-fuel ratio rich control is periodically performed so as to make the air-fuel ratio of the internal combustion engine richer than the desired air-fuel ratio. This resolves and removes the sulfur oxide deposited on the exhaust purification device, and this reduces and removes the NOx stored therein (regeneration process).

As for the air-fuel ratio rich control, in the technology disclosed in Patent Document 1, the opening degree of the throttle valve is reduced and the fuel injection amount is increased in performing the regeneration process of the exhaust purification device, whereby the regeneration process of the exhaust purification device is performed and the torque of the internal combustion engine is suppressed from varying rapidly.

Also, in the technology disclosed in Patent Document 2, an EGR valve is controlled to reduce the opening degree of an EGR path while the opening degree of the throttle valve is reduced depending on performing deceleration rich spike, whereby the injected fuel is suppressed from burning by reducing the internal pressure of a cylinder of the internal combustion engine.

Also, Patent Document 3 and 4 disclose the technology that may relate to the present invention.

### [PRIOR ART DOCUMENT]

### [PATENT DOCUMENT]

[Patent Document 1] Japanese Patent Application JP 10-184418 A
[Patent Document 2] Japanese Patent Application JP 2010-024865 A
[Patent Document 3] Japanese Patent Application JP 2009-138733 A
[Patent Document 4] WO 2006/095113

### [DISCLOSURE OF THE INVENTION]

### [PROBLEMS TO BE SOLVED BY THE INVENTION]

In the regeneration process of the exhaust purification device, the air-fuel ratio can be made richer by increasing the fuel injection amount, but excessively injected fuel degrades the fuel consumption of the internal combustion engine. On the other hand, the intake air amount of the internal combustion engine is reduced, whereby the air-fuel ratio can be made richer while an increase in the fuel injection amount is suppressed at the minimum. However, the opening degree of the throttle valve is reduced (squeezed) in order to reduce the intake air amount, so that the pump loss (pumping loss) of the internal combustion engine is increased. An increase in the pump loss reduces the engine output. Thus, for example, an increase in the fuel injection amount is required such that the reduced engine output is corrected to achieve the desired output. This results in degrading the fuel consumption of the internal combustion engine. Such an increase in the pumping loss in performing the air-fuel ratio rich control often occurs, for example, in a diesel engine provided with a supercharger at the exhaust side.

The present invention has been made in view of the above circumstances and has an object to provide a control device for an internal combustion engine that suppresses an increase in the pump loss of the internal combustion engine in performing the air-fuel ratio rich control.

### [MEANS FOR SOLVING THE PROBLEMS]

In order to achieve the above object, a control device for an internal combustion engine according to the present invention includes: a supercharger provided at an exhaust side in the internal combustion engine and supercharging intake air by use of energy of exhaust gas; an exhaust system capacity change unit configured to change an exhaust system capacity which is a sum of a capacity of an exhaust manifold and a capacity of a space communicating with the exhaust manifold of the internal combustion engine; an exhaust purification device provided at a downstream side of the supercharger, and purifying the exhaust gas of the internal combustion engine; an exhaust gas recirculation path communicating the exhaust side at an upstream side of the supercharger with the intake side and flowing a part of the exhaust gas to the intake path; a valve opening control unit configured to control an opening degree of a throttle valve provided in an intake path of the internal combustion engine; and an air-fuel ratio control unit configured to control an air-fuel ratio depending on a driving state of the internal combustion engine, wherein the valve opening control unit adjusts the opening degree of the throttle valve, such that the opening degree of the throttle valve is increased, depending on a reduction in an intake air amount due to a reduction in supercharging efficiency of the supercharger caused by increasing the exhaust system capacity, when the air-fuel ratio control unit makes the air-fuel ratio rich and the exhaust system capacity change unit increases the exhaust system capacity, during a regeneration process of the exhaust gas purification device, wherein the exhaust system capacity change unit is an isolation valve provided near an exhaust gas inlet of the exhaust gas recirculation path.

With the above configuration, by increasing the exhaust system capacity in performing the air-fuel ratio rich control of the internal combustion engine, the pulsation of the exhaust pressure (exhaust pulsation) can be reduced, that is, the kinetic energy of the exhaust gas can be reduced. This reduces the supercharging efficiency of the supercharger and reduces the intake air amount. Therefore, the opening degree of the throttle valve can be increased to reduce the pump loss. Therefore, an increase in the pump loss of the internal combustion engine can be suppressed in performing the air-fuel ratio rich control.

In particular, in the control device for the internal combustion engine according to the present invention, the exhaust system capacity change unit may change the exhaust system capacity by changing a communication state of the exhaust gas recirculation path.

With the above configuration, the exhaust gas recirculation path is communicated in performing the air-fuel ratio rich control of the internal combustion engine and the exhaust system capacity is increased, thereby reducing the kinetic energy of the exhaust gas. This reduces the supercharging efficiency of the supercharger and reduces the intake air amount, whereby the opening degree of the throttle valve can be increased. Therefore, an increase in the pump loss of the internal combustion engine can be suppressed in performing the air-fuel ratio rich control.

Furthermore, the control device for the internal combustion engine according to the present invention may include a supercharging efficiency control unit configured to control supercharging efficiency of the supercharger, the air-fuel ratio control unit may make the air-fuel ratio of the internal combustion engine rich, and the supercharging efficiency control unit may reduce the supercharging efficiency of the supercharger.

With the above configuration, the supercharging efficiency of the supercharger is decreased in performing the air-fuel ratio rich control of the internal combustion engine, and the intake air amount is further reduced. Thus, the opening degree of the throttle valve can be increased. Therefore, an increase in the pump loss of the internal combustion engine can be suppressed in performing the air-fuel ratio rich control.

Also, the control device for the internal combustion engine according to the present invention may include a purification ability recognition unit configured to recognize an exhaust gas purification ability of the exhaust purification device, the air-fuel ratio control unit may make the air-fuel ratio of the internal combustion engine rich depending on a recognition result of the purification ability recognition unit.

With the above configuration, the fuel consumption can be suppressed from deteriorating in performing the regeneration process of the exhaust purification device.

With the above configuration, the changeable amount of the exhaust system capacity of the internal combustion engine can be further increased. That is, the exhaust system capacity of the internal combustion engine can be further increased in performing the air-fuel ratio rich control, thereby further reducing the kinetic energy of the effluent gas. This can increase the opening degree of the throttle valve, thereby suppressing an increase in the pump loss of the internal combustion engine in performing the air-fuel ratio rich control.

### [EFFECTS OF THE INVENTION]

According to the present invention, it is possible to reduce an increase in the pump loss of the internal combustion engine in performing the air-fuel ratio rich control.

### [BRIEF DESCRIPTION OF THE DRAWINGS]

FIG. 1 is a view of a configuration example of an engine system according to an embodiment;
FIG. 2 is a sectional view of a configuration example of a cylinder of an engine according to the embodiment;
FIG. 3 is a view of an example of a correlation among an intake pressure, an exhaust pressure, and a crank angle of the engine;
FIG. 4 is a view of an example of a correlation between an exhaust system capacity and an exhaust pulsation amplitude of the engine;
FIG. 5 is a view of an example of a correlation between the exhaust system capacity of the engine and an engine output; and
FIG. 6 is a flowchart of an example of processes of an engine ECU.

### [MODES FOR CARRYING OUT THE INVENTION]

A following description will be given of an embodiment according to the present invention in detail with reference to drawings.

### [Embodiment]

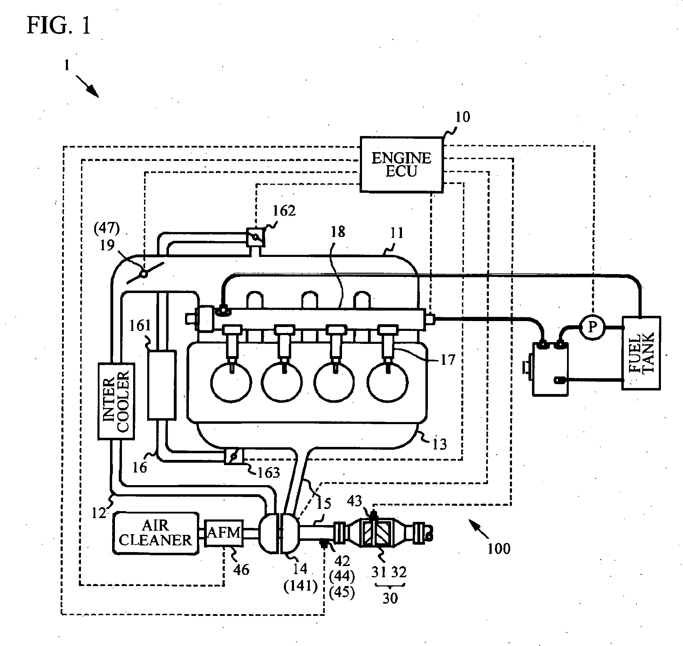

A description will be given of embodiments according to the present invention with reference to drawings. FIG. 1 is a view of a configuration example of an engine system 1 including a control device for an internal combustion engine according to the present invention. Additionally, FIG. 1 partially illustrates the engine.

The engine system 1 illustrated in FIG. 1 includes an engine 100 as a power source, and an engine electronic control unit (ECU) controlling the driving of the engine 100 in a unified manner. The engine 100 is provided with: a turbocharger 14 and an exhaust purification device 30 at a downstream side of an exhaust manifold 13; and an electric VVT mechanism 26 and a hydraulic VVT mechanism 27 for respectively varying valve timings of an intake valve 22 and an exhaust valve 23. Also, the engine 100 is provided with an isolation valve 163 near an exhaust gas inlet portion of an EGR path 16. Further, the engine 100 is provided in an intake path 12 with a diesel throttle 19 for adjusting the intake air amount. Furthermore, the engine 100 is provided with a pressure sensor 42 and a NOx sensor 45 in an exhaust path 15 at an upstream side of the exhaust purification device 30.

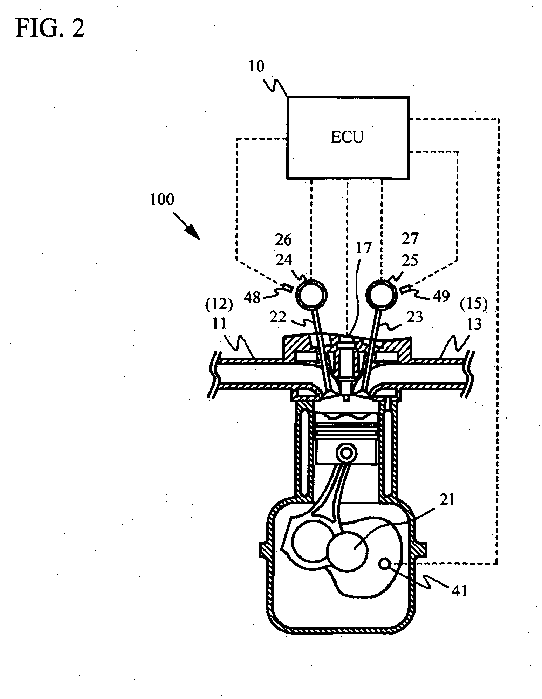

FIG. 2 is a sectional view of a configuration example of a cylinder of the engine 100 according to the embodiment. The engine 100 is a diesel engine having cylinders installed in a vehicle, and each cylinder includes a piston defining a combustion chamber. The piston of each combustion chamber is slidably fitted into the cylinder of the engine 100, and is connected to a crank shaft 21 which is an output shaft member through a connecting rod.

An engine ECU 10 determines a fuel injection amount and an injection timing based on information on an intake air amount detected by an airflow meter 46 and information on a piston position and the like detected by a crank angle sensor 41, and sends signals to an injector 17. The injector 17 ejects the fuel of an instructed injection amount into the combustion chamber at an instructed injection timing in response to signals from the engine ECU 10. The fuel ejected by the injector 17 is changed into fog in the combustion chamber, and forms the mixture gas together with the intake air that flows into the combustion chamber room in response to the opening of the intake valve. Subsequently, the mixture gas is compressed and fired in the combustion chamber by the upstroke of the piston, and expands the combustion room to move down the piston. Because this down stroke is changed into an axial rotation of the crank shaft 21 through the connecting rod, the engine 100 outputs power. In this case, it is preferable that the engine 100 should be the diesel engine using light oil as fuel, but not limited to this.

Additionally, the engine 100 is an example of an internal combustion engine according to the present invention.

The crank angle sensor 41 is provided near an axis of the crank shaft 21. The crank angle sensor 41 detects a rotational angle of the axis of the crank shaft 21, and sends a detection result to the engine ECU 10. Therefore, the engine ECU 10 obtains information on a crank angle such as a rotational number and a rotational angular velocity of the axis of the crank shaft 21 in the driving state. Moreover, the engine ECU 10 calculates an engine rotational number and an engine torque based on the obtained rotational number and rotational angular velocity of the axis of the crank shaft 21, and then recognizes the output of the engine 100.

Plural intake and exhaust valves are installed in each combustion chamber. FIG. 2 illustrates an intake valve and an exhaust valve. The intake valve 22 is arranged in each inlet port of the combustion chamber, and an intake camshaft 24 for opening and closing the intake valves 22 is arranged. Further, the exhaust valve 23 is arranged in each exhaust port of the combustion chamber, and an exhaust camshaft 25 is arranged for opening and closing the exhaust valves 23.

The intake valve 22 and the exhaust valve 23 are respectively opened or closed in response to the rotation of the intake camshaft 24 and the exhaust camshaft 25 into which the rotation of the crank shaft 21 is transmitted by a connecting mechanism (for example, a timing belt or a timing chain). The intake valve 22 connects or disconnects between the intake port and the combustion chamber, and the exhaust valve 23 connects/disconnects the exhaust port and/from the combustion chamber. Additionally, the phases of the intake valve 22 and the exhaust valve 23 are indicated by a crank corner as a reference.

The intake camshaft 24 includes the electric VVT mechanism 26 as a variable valve timing mechanism (hereinafter referred to as VVT mechanism). This electric VVT mechanism 26 rotates the intake camshaft 24 by an electric motor in response to instructions from the engine ECU 10. Because this changes the rotational phase of the intake camshaft 24 relative to the crank shaft 21, a valve timing of the intake valve 22 is changed. In this case, the rotational phase of the intake camshaft 24 is detected by an intake cam angle sensor 48, and is then output to the engine ECU 10. Therefore, the engine ECU 10 can obtain the phase of the intake camshaft 24 and the phase of the intake valve 22. Also, the phase of the intake camshaft 24 is indicated by a crank angle as a reference.

The exhaust camshaft 25 includes the hydraulic VVT mechanism 27. This hydraulic VVT mechanism 27 rotates the exhaust camshaft 25 by an oil control valve (hereinafter referred to as OCV) in response to the instructions from the engine ECU 10. Because this changes the rotational phase of the exhaust camshaft 25 relative to the crank shaft 21, a valve timing of the exhaust valve 23 is changed. In this case, the rotational phase of the exhaust camshaft 25 is detected by an exhaust cam angle sensor 49, and is then output to the engine ECU 10. Therefore, the engine ECU 10 can obtain the phase of the exhaust camshaft 25 and the phase of the exhaust valve 23. Also, the phase of the exhaust camshaft 25 is indicated by a crank angle as a reference.

Returning to FIG. 1, the engine 100 includes a common rail fuel injection system composed of the injector 17, a common rail 18, a low-pressure fuel pump, and a high-pressure fuel pump. The fuel pumped from a fuel tank by the low-pressure fuel pump is ejected at a high pressure into the common rail 18 by the high-pressure fuel pump, and is then accumulated.

The common rail 18 is a container for accumulating the high-pressure fuel that is supplied to the injector 17. The fuel pressure-fed by the high-pressure fuel pump is accumulated in the common rail 18 to have a pressure that is necessary for ejection, and is then supplied to the injector 17 of each combustion chamber through a high pressure pipe. Also, a rail pressure sensor and a reducing pressure valve are installed in the common rail 18. The engine ECU 10 instructs the reducing pressure valve to open, when the fuel pressure within the common rail 18 output from the rail pressure sensor is greater than a rated value. The fuel is discharged from the reducing pressure valve, so that the common rail pressure is always adjusted to be equal to or lower than the rated value. The fuel discharged from the reducing pressure valve returns to the fuel tank through a relief pipe.

The injector 17 is installed in each combustion chamber. The fuel supplied from the common rail 18 through the high-pressure pipe is ejected and supplied into the combustion chamber of the engine cylinder by the injector 17 based on the instructions from the engine ECU 10. The engine ECU 10 determines a fuel injection amount and an injection timing based on information on an intake air amount from the airflow meter 46 and information on the piston position from the crank angle sensor 41 and the like, and sends signals to the injector 17. The injector 17 ejects the fuel with the high pressure and the instructed injection amount into the combustion chamber at an instructed injection timing in response to signals from the engine ECU 10. The leak fuel from the injector 17 returns to the fuel tank through the relief pipe. In this case, the injector 17 may be installed at any position of the combustion chamber depending on the specification of the engine 100.

An intake manifold 11 is connected to each combustion chamber of the engine 100. The intake manifold 11 is connected to an air cleaner through the airflow meter 46, the diesel throttle 19, an intercooler, and a compressor of the turbocharger 14 by the intake path 12, and introduces the intake air from the outside of the engine 100 into each combustion chamber.

Additionally, the intake manifold 11 and the intake path 12 are an example of an intake path according to the present invention.

A throttle position sensor 47 is installed in the diesel throttle 19. The airflow meter 46 and the throttle position sensor 47 respectively detect an amount of the intake air flowing in the intake path 12 and an opening degree of the diesel throttle 19, and then send the detection results to the engine ECU 10. The engine ECU 10 recognizes the intake air amount introduced into the intake manifold 11 based on the sent detection results, and adjusts the opening degree of the diesel throttle 19 to introduce the intake air that is necessary for driving the engine 100.

It is preferable that the diesel throttle 19 should be a throttle by wire type using a step motor, but may be another mechanism that can change a valve opening degree of the diesel throttle 19 into any degree.

Additionally, the diesel throttle 19 is an example of the throttle valve according to the present invention.

Further, the exhaust manifold 13 is connected to each combustion chamber of the engine 100. The exhaust manifold 13 is connected to an exhaust purification device 30 through an exhaust turbine of the turbocharger 14 by the exhaust path 15, and exhausts the combusted exhaust gas to the outside of the engine 100.

The turbocharger 14 rotates the exhaust turbine by use of the kinetic energy of the exhaust gas, and compresses and introduces the intake air flowing through the air cleaner into the intercooler. The compressed intake air is introduced into the intake manifold 11 after being cooled in the intercooler.

The turbocharger 14 is a variable nozzle type turbocharger (variable nozzle turbo, hereinafter referred to as VNT), and is provided with a variable nozzle vane mechanism 141 at the exhaust turbine side. The adjustment of the opening degree of the variable nozzle vane mechanism 141 controls an angle of the exhaust gas flowing toward a turbine impeller blade so as to adjust the supercharging pressure of the intake air introduced into the intake manifold 11. For example, a further reduction in the opening degree of the variable nozzle vane mechanism 141 further increases the exhaust gas flowing toward the turbine impeller blade, so that the energy efficiency of the exhaust gas increases and then the supercharging efficiency improves. Also, a further increase in the opening degree of the variable nozzle vane mechanism 141 further reduces the exhaust gas flowing toward the turbine impeller blade, so that the energy efficiency of the exhaust gas is reduced and the supercharging efficiency is reduced. In this case, the turbocharger 14 is not limited to the VNT, and may adjust the supercharging pressure (control of the energy efficiency of the exhaust gas) by a wastegate.

Additionally, the turbocharger 14 is an example of a supercharger according to the present invention. Further, the variable nozzle vane mechanism 141 is an example of a supercharging efficiency control unit according to the present invention.

The exhaust purification device 30 purifies the exhaust gas of the engine 100, and includes: a purification catalyst 31 purifying NOx, HC, and CO; and a DPF 32 collecting PM (particulate matters) such as soot.

The purification catalyst 31 is provided at an upstream side of the DPF 32, and is a three - way catalyst which can purify HC, CO, and NOx in the exhaust gas of the engine 100. In the purification catalyst 31, a catalyst carrier having a porous honeycomb structure is coated with a compound oxide having a noble metal. The purification catalyst 31 through which the exhaust gas passes is known. The purification catalyst 31 in the present embodiment is a NOx storage and reduction type which stores NOx in the exhaust gas when the air-fuel ratio is lean and which reduces NOx by reduction ingredients (HC, CO) in the exhaust gas when the air-fuel ratio is stoich or rich. However, the purification catalyst 31 is not limited to this. Plural purification catalysts 31 may be used depending on the displacement of the engine 100 or use area.

The DPF 32 is provided at a downstream side of the purification catalyst 31 and is a known wall-flow type filter made by a porous cordierite ceramic. The DPF 32 is not limited to the cordierite ceramic, and is applicable to another ceramic such as a SiC (silicone carbide). In this case, in the exhaust purification device 30, the DPF 32 may be provided at an upstream side and the purification catalyst 31 may be provided at a downstream side thereof. Also, the exhaust purification device 30 may be a Diesel Particulate NOx Reduction system (DPNR) combining a particulate filter and a NOx storage reduction catalyst.

A temperature sensor 43 is provided in the exhaust purification device 30, detects the bed temperature of the purification catalyst 31 and the DPF 32, and sends the detection result to the engine ECU 10. The engine ECU 10 recognizes the actual temperature of the purification catalyst 31 and the DPF 32 based on the sent detection result, and determines whether or not the actual temperature of the purification catalyst 31 and the DPF 32 achieves the temperature required for the regeneration process. For example, PM deposited on the DPF 32 is burned and removed when the temperature of the PM is more than a predetermined temperature (for example, 600 degrees Celsius). Thus, by detecting the bed temperature of the DPF 32, it is recognized whether or not the temperature of the DPF 32 achieves the temperature required for the regeneration process. In this case, plural temperature sensors 43 may be provided in the purification catalyst 31 and the DPF 32 and may detect the temperature.

The pressure sensor 42 is provided near the inlet at the upstream side of the exhaust purification device 30, detects the exhaust pressure at the inlet of the exhaust purification device 30, and sends the detection result to the engine ECU 10. The engine ECU 10 recognizes the clogging degree in the DPF 32 based on the sent detection result, thereby recognizing the exhaust gas purification ability of the exhaust purification device 30. In this case, the pressure sensor 42 may be provided not only at an upstream side of the exhaust purification device 30 but also near the outlet at a downstream side thereof so as to detect the difference between the inlet pressure and the outlet pressure, and the clogging degree of the DPF 32 may be recognized based on the difference.

Additionally, the pressure sensor 42 is an example of a purification recognition ability unit according to the present invention.

An A/F sensor 44 is provided at an upstream side of the exhaust purification device 30, detects the air-fuel ratio in the engine 100 based on the oxygen density and the unburned fuel gas density in the exhaust gas, and sends the result to the engine ECU 10. Therefore, the engine ECU 10 can recognize the information on the air-fuel ratio of the engine 100 in various load states. As for the A/F sensor 44, a surface of zirconia is coated with platinum and an outer circumference of an outer electrode is provided with a diffusion controlled layer. However, the A/F sensor 44 is not limited to this. When voltage is applied to an element of the A/F sensor 44, oxygen ion current is generated based on the oxygen density in the lean exhaust gas (A/F > 14.6) or the unburned-fuel gas density in the rich exhaust gas (A/F <14.6). In this case, since the output current of the A/F sensor 44 positively correlates to the air-fuel ratio, the air-fuel ratio can be detected in the wide area.

The NOx sensor 45 is provided at an upstream side of the exhaust purification device 30, detects the NOx density in the exhaust gas, and sends the result to the engine ECU 10. The engine ECU 10 recognizes an amount of NOx restored in the purification catalyst 31 based on the integrated value of the detection result from the NOx sensor 45, thereby recognizing the exhaust gas purification ability of the exhaust purification device 30. As for the NOx sensor 45, its configuration is similar to the A/F sensor 44 and a surface of zirconia is coated with patinum. However, the NOx sensor 45 is not limited to this. Also, the NOx sensor 45 may be provided at a downstream of the exhaust purification device 30, and may detect the NOx density in the exhaust gas which has passed through the exhaust purification device 30.

Additionally, the NOx sensor 45 is an example of a purification recognition ability unit according to the present invention.

The exhaust manifold 13 is connected to the intake manifold 11 through the EGR path 16. The exhaust gas flows into the EGR path 16, is cooled in an EGR cooler 161, flows toward the intake manifold 11 while the flow rate of the exhaust gas is being adjusted by an EGR valve 162, and is introduced into the combustion chamber with the intake air. The EGR valve 162 adjusts its opening degree in response to the instructions from the engine ECU 10 to suitably adjust the recirculation amount of the exhaust gas flowing toward the intake manifold 11. Thus, the EGR gas having a suitable amount corresponding to the driving state is recirculated and supplied to the intake manifold 11, thereby reducing the combustion temperature in the engine 100 and reducing the NOx emission. Additionally, the EGR path 16 is an example of an exhaust gas recirculation path according to the present invention.

Additionally, the EGR valve 162 is an example of an control valve according to the present invention.

The isolation valve 163 is provided at the connection portion where the exhaust manifold 13 and the EGR path 16 are connected to each other, that is, at the exhaust gas inlet portion of the EGR path 16. The isolation valve 163 is capable of closing the EGR path 16 in response to the instructions from the engine ECU 10. When the isolation valve 163 closes the EGR path 16, the exhaust system capacity of the engine 100 (at least, the sum capacity of the exhaust manifold 13, the exhaust path 15, and the EGR path 16) can decrease by the capacity of the EGR path 16. In contrast, when the isolation valve 163 opens the EGR path 16, the exhaust system capacity of the engine 100 can increase by the capacity of the EGR path 16. In this case, the isolation valve 163 can be provided at an arbitrary position in the EGR path 16. However, in a case where the isolation valve 163 is provided at the exhaust gas inlet portion of the EGR path 16, the exhaust system capacity can further change.

Additionally, the isolation valve 163 is an example of an exhaust system capacity change unit according to the present invention.

The engine ECU 10 is a computer including: a central processing unit (CPU) performing arithmetic processing; a read only memory (ROM) storing programs or the like; and a random access memory (RAM) or a non-volatile RAM (NVRAM) storing data or the like. The engine ECU 10 reads the detection results from the plural sensors installed at parts of the engine 100, and comprehensively controls the driving operation of the engine 100 based on the detection results.

Also, the engine ECU 10 controls the electric VVT mechanism 26 and the hydraulic VVT mechanism 27 to adjust a valve overlap period of the intake valve 22 and the exhaust valve 23, thereby improving the volumetric efficiency of the engine 100. The improvement control of the volumetric efficiency performed by the engine ECU 10 will be described below.

When a request to increase the volumetric efficiency of the engine 100 (for example, a request to accelerate the vehicle) is received, the engine ECU 10 recognizes the intake air amount and the rotational speed of the engine 100 based on the received detection results of the crank angle sensor 41 and the airflow meter 46. The engine ECU 10 adjusts the electric VVT mechanism 26 and the hydraulic VVT mechanism 27 in a manner as will be described in (1) and (2) below, on the basis of the recognized rotational speed and the recognized intake air amount of the engine 100. (1) The opening timings of the intake valve 22 and the exhaust valve 23 are adjusted such that the minimum peak of the exhaust pressure pulsation (exhaust pulsation) comes closer to the exhaust top dead center (TDC) of the engine 100. (2) The valve overlap period of the intake valve 22 and the exhaust valve 23 is adjusted so as to be identical to the minimum peak of the exhaust pulsation shifted closer to the TDC. In this case, it is preferable that the engine ECU 10 adjusts the electric VVT mechanism 26 and the hydraulic VVT mechanism 27 based on a correlative map which is beforehand made at a bench test.

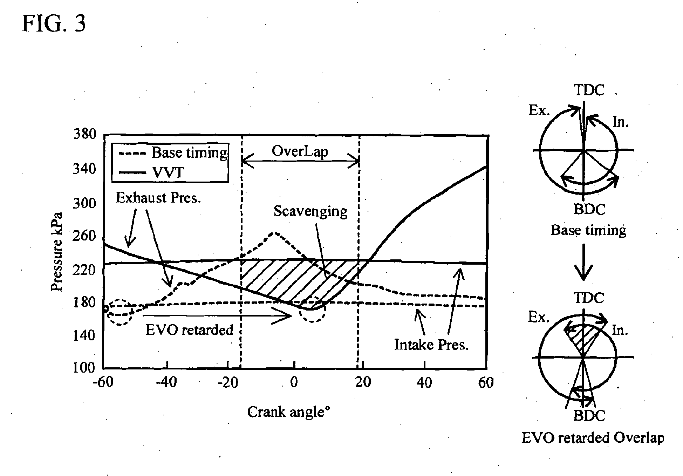

FIG. 3 is a view of an example of a correlation among an intake pressure, an exhaust pressure, and a crank angle of the engine 100. The intake pressure of the internal combustion engine is almost constant regardless of the crank angle, whereas the exhaust pressure periodically changes (pulses) in response to the exhaust gas intermittently exhausted from each combustion chamber. The phase of the exhaust pulsation changes with a change in the engine rotational speed and a change in the intake air amount, but greatly changes with a change in the opening timings of the intake valve 22 and the exhaust valve 23. For example, the timing when the exhaust gas is exhausted into the exhaust manifold 13 is delayed as the opening timing of the exhaust valve 23 is delayed, so the phase of the exhaust pulsation is shifted to the TDC side (the right side in FIG. 3). Thus, the phase of the exhaust pulsation can be controlled by changing the opening timings of the intake valve 22 and the exhaust valve 23.

Next, the valve overlap period of the intake valve 22 and the exhaust valve 23 is adjusted so as to be identical to the minimum peak of the exhaust pulsation shifted closer to the exhaust top dead center (TDC), thereby making the intake pressure higher than the exhaust pressure during the valve overlap period. This facilitates the introduction of the intake air into the combustion chamber over the intake valve 22, and the introduced intake air facilitates the exhaust of the exhaust gas from the combustion chamber over the exhaust valve 23. That is, this exerts the scavenging effect.

In addition to the above control, the engine ECU 10 instructs the isolation valve 163 to close the EGR path 16 so as to reduce the exhaust system capacity by the capacity of the EGR path 16 and to increase the amplitude of the exhaust pulsation.

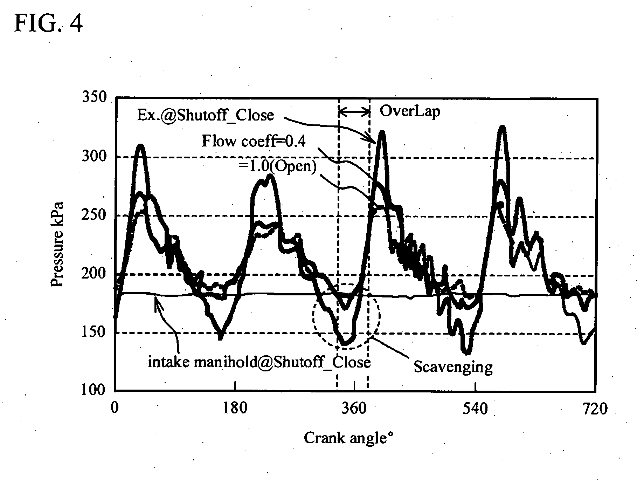

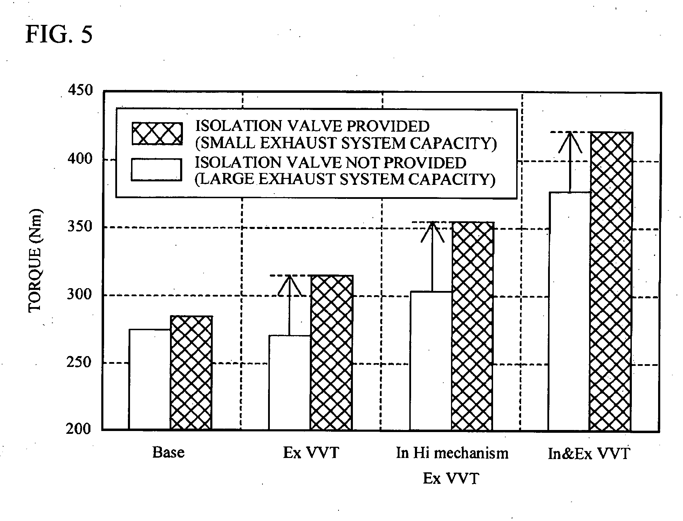

FIG. 4 is a view of an example of a correlation between the exhaust system capacity and the exhaust pulsation amplitude of the engine 100. FIG. 5 is a view of an example of a correlation between the exhaust system capacity of the engine 100 and an engine output. As illustrated in FIG. 4, when the EGR path 16 is closed by the isolation valve 163, the amplitude of the exhaust pulsation of the engine 100 increases. Also, as illustrated in FIG. 5, when the EGR path 16 is closed by the isolation valve 163, the output of the engine 100 further improves. That is, when the EGR path 16 is closed by the isolation valve 163 (when the exhaust system capacity is reduced), the amplitude of the exhaust pulsation increases (the exhaust pulsation strengthens), so the scavenging effect in the engine 100 is improved, thereby further improving the engine output. That is, this further improves the volumetric efficiency of the engine 100. In such a way, a decrease in the exhaust system capacity of the engine 100 further improves the volumetric efficiency. In this case, it is preferable to provide the isolation valve 163 in such a position to further reduce the exhaust system capacity (for example, in the vicinity of the exhaust gas inlet portion of the EGR path 16), in order to further strengthen the exhaust pulsation of the engine 100.

Further, the engine ECU 10 performs the control for reducing the pumping loss of the engine 100 while performing the regeneration process of the exhaust purification device 30. A description will be given of the reduction control of the pumping loss performed by the engine ECU 10 below.

Firstly, the engine ECU 10 recognizes the clogging degree of the DPF 32 based on the detection result of the pressure sensor 42, and recognizes an amount of NOx stored in the purification catalyst 31 based on the integrated value of the detection result of the NOx sensor 45. That is, the engine ECU 10 recognizes the exhaust gas purification ability of the exhaust purification device 30 based on the detection results of the pressure sensor 42 and the NOx sensor 45. Specifically, when the detection value of the pressure sensor 42 and the integrated detection value of the NOx sensor 45 are respectively less than predetermined thresholds, the engine ECU 10 recognizes that the exhaust gas purification ability of the exhaust purification device 30 satisfies a required value. In contrast, when at least one of the detection value of the pressure sensor 42 and the integrated detection value of the NOx sensor 45 is less than the predetermined threshold, the engine ECU 10 recognizes that the exhaust gas purification ability of the exhaust purification device 30 does not satisfy the required value. The predetermined threshold is the pressure value or the NOx integrated value at the time when the exhaust purification device 30 can purify the exhaust gas adequately, and is applicable to an arbitrary value beforehand calculated at a bench test. In this case, the recognition of the exhaust gas purification ability of the exhaust purification device 30 is not limited to be based on the detection results of the pressure sensor 42 and the NOx sensor 45. For example, the exhaust gas purification ability of the exhaust purification device 30 may be estimated based on the driving state of the engine 100 (a driving history) or on another way.

The engine ECU 10 makes the air-fuel ratio richer than the desired air-fuel ratio (air-fuel ratio rich control), when at least one of the detection value of the pressure sensor 42 and the integrated detection value of the NOx sensor 45 is equal to or more than the predetermined threshold. Specifically, the engine ECU 10 instructs the diesel throttle 19 to reduce its opening degree, while instructing the injector 17 to increase the fuel injection amount until the temperature of the exhaust purification device 30 achieves the temperature required for the regeneration process on the basis of the detection result of the temperature sensor 43. The air-fuel ratio rich control of the engine 100 is performed during a predetermined period set beforehand, but may be stopped based on the detection result of the pressure sensor 42. In this case, the engine ECU 10 may perform the air-fuel ratio rich control by adjusting only the opening degree of the diesel throttle 19.

Subsequently, the engine ECU 10 instructs the isolation valve 163 to open the EGR path 16 (opened) to increase the exhaust system capacity of the engine 100 by the capacity of the EGR path 16. Thus, the exhaust pulsation is reduced (referring to FIG. 4), that is, the enthalpy (kinetic energy) of the exhaust gas flowing into the turbocharger 14 through the exhaust path 15 is decreased, and the supercharging efficiency of the turbocharger 14 is decreased. In this case, the engine ECU 10 instructs the isolation valve 163 to open regardless of the request to increase the volumetric efficiency of the engine 100.

The engine ECU 10 instructs the EGR valve 162 to increase its opening degree to improve a communication rate of the EGR path 16 and the intake manifold 11, while performing the above opening control of the isolation valve 163. That is, an improvement in the communication rate of the EGR path 16 and the intake manifold 11 further increases the exhaust system capacity of the engine 100. This further reduces the exhaust pulsation, that is, this further reduces the kinetic energy of the exhaust gas flowing into the turbocharger 14, thereby further reducing the supercharging efficiency of the turbocharger 14. Also, an increase in the opening degree of the EGR valve 162 increases the exhaust gas recirculation amount flowing to the intake side, thereby reducing the exhaust gas amount flowing to the turbocharger 14. Therefore, the supercharging efficiency of the turbocharger 14 further deteriorates. Further, the engine ECU 10 instructs the variable nozzle vane mechanism 141 of the turbocharger 14 to increase its opening degree (for example, to be fully opened). This reduces the amount of the exhaust gas flowing to the turbine impeller wings, thereby further reducing the supercharging efficiency of the turbocharger 14. The engine 100 reduces the intake air amount by performing the control for reducing the supercharging efficiency of the turbocharger 14 in the above way. In this case, at least one of the opening degrees of the EGR valve 162 and the variable nozzle vane mechanism 141 may be changed, and both the opening degrees may not be changed.

Subsequently, the engine ECU 10 adjusts the opening degree of the diesel throttle 19 so as to bring the air-fuel ratio of the engine 100 closer to the desired air-fuel ratio in the air-fuel ratio rich control, on the basis of the detection results of the airflow meter 46 and the throttle position sensor 47. That is, the diesel throttle 19 is instructed to increase (open) its opening degree based on a reduction in the intake air amount, thereby bringing the intake air amount flowing to the combustion chamber closer to the desired intake air amount in the air-fuel rich control. Therefore, a reduction in the pressure difference between the upstream side and the downstream side of the diesel throttle 19 reduces the pumping loss of the engine 100. In this case, the opening degree of the diesel throttle 19 is not limited to a degree for compensating the reduced intake air amount, and may be larger depending on the output of the engine 100. Also, the engine ECU 10 may perform the control for reducing the fuel injection amount of the injector 17, while performing the control of the opening degree of the diesel throttle 19.

The engine ECU 10 repeats the above processes until the regeneration process of the exhaust purification device 30 is finished.

In the air-fuel ratio rich control performed in the regeneration process of the exhaust purification device, an increase in the fuel injection amount might degrade the fuel consumption. However, an increase in the fuel injection amount can be suppressed at the minimum by reducing the intake air amount. However, the opening degree of the throttle valve is reduced in order to reduce the intake air amount, so that the pumping loss of the internal combustion engine increases. This reduces the engine output, for example, so an increase in the fuel injection amount is required in order to compensate the reduced engine output to be the desired output. This results in degrading the fuel consumption.

Thus, in the present invention, the correlation between the exhaust system capacity and the exhaust pulsation of the internal combustion engine is noticed. That is, in the engine system 1 according to the present embodiment, the isolation valve 163 opens the EGR path 16 while the regeneration process of the exhaust purification device 30 (air-fuel ratio rich control) is performed. This reduces the exhaust pulsation, so the supercharging efficiency of the turbocharger 14 is reduced. Further, in the engine system 1 according to the present embodiment, the opening degree of the diesel throttle 19 increases depending on a reduction in the intake air amount due to a reduction in the supercharging efficiency, thereby reducing the pumping loss of the engine 100. This can suppress an increase in the pump loss of the internal combustion engine in performing the air-fuel ratio rich control. This can suppress a reduction in the engine output due to the pumping loss and suppress an increase in the fuel injection amount.

Further, in the engine system 1 according to the present embodiment, the opening degree of the EGR valve 162 increases while performing the opening control of the isolation valve 163, so the exhaust system capacity further increases. This further reduces the exhaust pulsation, that is, this further reduces the kinetic energy of the exhaust gas flowing into the turbocharger 14 to further reduce the supercharging efficiency. Furthermore, in the engine system 1 according to the present embodiment, the opening degree of the variable nozzle vane mechanism 141 of the turbocharger 14 increases while performing the opening control of the isolation valve 163. This further reduces the supercharging efficiency of the turbocharger 14. That is, since the intake air amount can be further reduced, the opening degree of the diesel throttle 19 can be further increased. Therefore, the pumping loss can be further reduced, thereby more effectively suppress an increase in the pump loss of the internal combustion engine in performing the air-fuel ratio rich control.

Thus, in the engine system 1 according to the present embodiment, the opening degree of the diesel throttle 19 increases and the isolation valve 163 opens the EGR path 16, while the air-fuel ratio rich control is performed. Therefore, the control for reducing the pumping loss of the engine 100 can be performed. In this case, it is not limited that the air-fuel ratio rich control is performed at the time of the regeneration process of the exhaust purification device 30. That is, the above pumping loss reduction control can be performed, even when the air-fuel ratio rich control is performed and except when the regeneration process of the exhaust purification device 30 is performed.

Additionally, the engine ECU 10 is an example of an exhaust system capacity change unit, a valve opening control unit, an air-fuel ratio control unit, an exhaust gas recirculation amount control unit, a supercharging efficiency control unit, and a purification ability recognition unit.

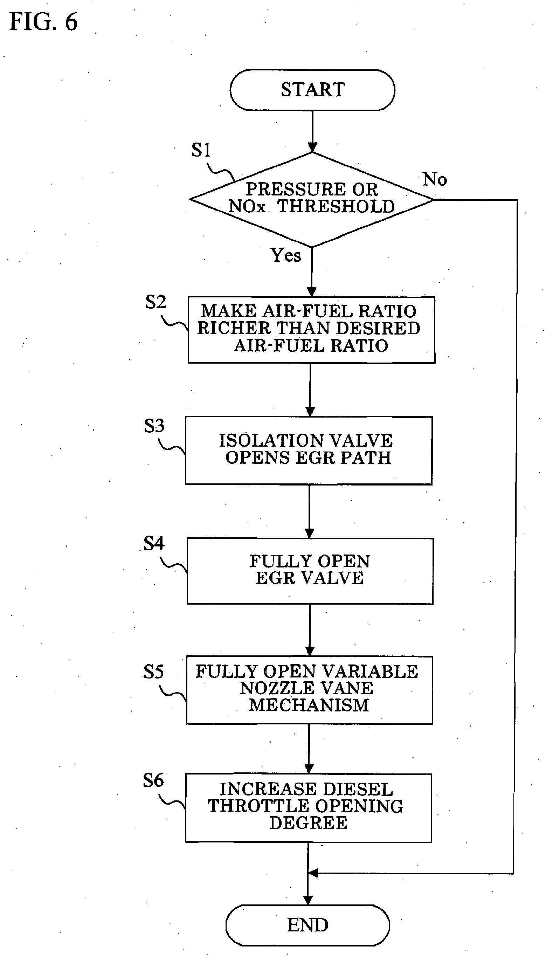

Next, a description will be given of operations of the engine system 1 with reference to the control by the engine ECU 10. FIG.6 is a flowchart of an example of processes of the engine ECU 10. The engine system 1 according to the present embodiment includes the isolation valve 163 capable of closing the EGR path 16, and the diesel throttle 19. The engine ECU 10 controls the diesel throttle 19 to increase its opening degree while the isolation valve 163 opens the EGR path 16 and the regeneration process of the exhaust purification device 30 is performed.

The engine ECU 10 starts performing the control, when an ignition switch is turned on. The engine ECU 10 repeats the following processes during the driving state of the engine 100. Also, the engine ECU 10 always receives the detection results of the pressure sensor 42, the NOx sensor 45, the airflow meter 46, and the throttle position sensor 47, during the processes.

At first, in step S1, the engine ECU 10 determines whether or not at least one of the received detection value of the pressure sensor 42 and the integraded detection value of the NOx sensor 45 is equal to or more than the predetermined threshold. Herein, detail explanation of the predetermined threshold is omitted, because it has been described above. When at least one of the detection value of the pressure sensor 42 and the integrated detection value of the NOx sensor 45 is less than the predetermined threshold (step S1/NO), the engine ECU 10 recognizes that the exhaust gas purification ability of the exhaust purification device 30 satisfies the required value, and finishes the processes of the control. When at least one of the detection value of the pressure sensor 42 and the integrated detection value of the NOx sensor 45 is equal to or more than the predetermined threshold (step S1/YES), the engine ECU 10 recognizes that the exhaust gas purification ability of the exhaust purification device 30 does not satisfy the required value, and then proceeds to next step S2.

In step S2, the engine ECU 10 performs the air-fuel ratio rich control for making the air-fuel ratio richer than the desired air-fuel ratio. Specifically, the engine ECU 10 instructs the diesel throttle 19 to reduce its opening degree while increasing the fuel injection amount of the injector 17, until the temperature of the exhaust purification device 30 detected by the temperature sensor 43 achieves the temperature required for the regeneration process. When finishing the process of step S2, the engine ECU 10 proceeds to next step S3.

In step S3, the engine ECU 10 instructs the isolation valve 163 to communicate (open) the EGR path 16 so as to increase the exhaust system capacity of the engine 100, thereby reducing the exhaust pulsation. When finishing the process of step S3, the engine ECU 10 proceeds to next step S4.

In step S4, the engine ECU 10 instructs the EGR valve 162 to be fully opened so as to improve the communication rate between the EGR path 16 and the intake manifold 11. That is, the communication rate between the EGR path 16 and the intake manifold 11 is improved, thereby further increasing the exhaust system capacity of the engine 100. When finishing the process of step S4, the engine ECU 10 proceeds to next step S5.

In step S5, the engine ECU 10 instructs the variable nozzle vane mechanism 141 to be fully opened so as to reduce the supercharging efficiency of the turbocharger 14, thereby reducing the intake air amount. When finishing the process of step S5, the engine ECU 10 proceeds to next step S6.

In step S6, the engine ECU 10 instructs the diesel throttle 19 to adjust (increase) its opening degree, depending on the reduced intake air amount based on the detection results of the airflow meter 46 and the throttle position sensor 47. When finishing the process of step S6, the engine ECU 10 finishes the processes of the control.

The above control can reduce the pumping loss of the engine 100 while performing the regeneration process of the exhaust purification device 30 (the air-fuel ratio rich control). It is therefore possible to suppress an increase in the pump loss of the internal combustion engine in performing the air-fuel ratio rich control. This can suppress an reduction in the engine output due to the pumping loss, thereby suppressing an increase in the fuel injection amount.

Additionally, the engine ECU 10 may perform any one of the processes in step S4 and S5, or may not both processes.

As mentioned above, in the engine system according to the present embodiment, the engine ECU is provided, the isolation valve is provided for opening and closing the EGR path, the diesel throttle is provided, and the opening degree of the diesel throttle increases while the isolation valve opens the EGR path and the regeneration process of the exhaust purification device is performed. This can suppress an increase in the pump loss of the internal combustion engine in performing the air-fuel ratio rich control.

Also, in the engine system according to the present embodiment, the opening degrees of the EGR valve and the variable nozzle vane mechanism of the turbocharger increase, when the opening control of the isolation valve is performed. This can further reduce the pumping loss of the engine, thereby more effectively reducing an increase in the pump loss of the internal combustion engine in performing the air-fuel ratio rich control.

While the exemplary embodiments of the present invention have been illustrated in detail, the present invention is not limited to the above-mentioned embodiments, and other embodiments, variations and modifications may be made without departing from the scope of the present invention.

For example, the present invention is not limited to the internal combustion engine equipped with a variable valve mechanism such as a VVT. That is, the present invention is not limited to an internal combustion engine performing the improvement control of the volumetric efficiency.

Also, a means for changing the exhaust system capacity of the internal combustion engine is not limited to the control for opening and closing the EGR path. For example, an auxiliary chamber having a predetermined capacity may be separately provided in the exhaust manifold so as to control the communication between the auxiliary chamber and the exhaust manifold, and an another arrangement may be provided for changing the exhaust system capacity.

### [DESCRIPTION OF LETTERS OR NUMERALS]

1 engine system
10 engine ECU (exhaust system capacity change unit, valve opening control unit, air-fuel ratio control unit, exhaust gas recirculation amount control unit, supercharging efficiency control unit, and purification ability recognition unit)
13 exhaust manifold
14 turbocharger (supercharger)
15 exhaust path
16 EGR path (exhaust gas recirculation path)
17 injector
19 diesel throttle (throttle valve)
30 exhaust purification device
31 purification catalyst
32 DPF
42 pressure sensor (purification ability recognition unit)
45 NOx sensor (purification ability recognition unit)
100 engine
141 variable nozzle vane mechanism (a supercharging efficiency control unit)
162 EGR valve (control valve)
163 isolation valve (exhaust system capacity change unit)

## Claims

1. A control device for an internal combustion engine comprising:
a supercharger (14) provided at an exhaust side in the internal combustion engine and supercharging intake air by use of energy of exhaust gas;
an exhaust system capacity change unit (10) configured to change an exhaust system capacity which is a sum of a capacity of an exhaust manifold and a capacity of a space communicating with the exhaust manifold of the internal combustion engine;
an exhaust purification device (30) provided at a downstream side of the supercharger (14), and purifying the exhaust gas of the internal combustion engine;
an exhaust gas recirculation path (16) communicating the exhaust side at an upstream side of the supercharger (14) with the intake side and flowing a part of the exhaust gas to the intake path;
a valve opening control unit (10) configured to control an opening degree of a throttle valve (19) provided in an intake path of the internal combustion engine; and
an air-fuel ratio control unit (10) configured to control an air-fuel ratio depending on a driving state of the internal combustion engine,
wherein the valve opening control unit (10) adjusts the opening degree of the throttle valve (19), such that the opening degree of the throttle valve (19) is increased, depending on a reduction in an intake air amount due to a reduction in supercharging efficiency of the supercharger (14) caused by increasing the exhaust system capacity, when the air-fuel ratio control unit (10) makes the air-fuel ratio rich and the exhaust system capacity change unit (10) increases the exhaust system capacity, during a regeneration process of the exhaust gas purification device (30),
wherein the exhaust system capacity change unit (10) is an isolation valve (163) provided near an exhaust gas inlet of the exhaust gas recirculation path (16).

2. The control device for the internal combustion engine of claim 1,,
wherein the exhaust system capacity change unit (10) changes the exhaust system capacity by changing a communication state of the exhaust gas recirculation path (16).

3. The control device for the internal combustion engine of any one of claim 1 or 2, further comprising a supercharging efficiency control unit (10) configured to control supercharging efficiency of the supercharger (14),
wherein the air-fuel ratio control unit (10) makes the air-fuel ratio of the internal combustion engine rich, and the supercharging efficiency control unit (10) reduces the supercharging efficiency of the supercharger (14).

4. The control device for the internal combustion engine of any one of claims 1 to 3, further comprising:
a purification ability recognition unit (10) configured to recognize an exhaust gas purification ability of the exhaust purification device (30),
wherein the air-fuel ratio control unit (10) makes the air-fuel ratio of the internal combustion engine rich depending on a recognition result of the purification ability recognition unit (10).

## Patentansprüche

1. Steuervorrichtung für eine Verbrennungskraftmaschine, aufweisend:
einen Turbolader (14), der sich an einer Abgasseite in der Verbrennungskraftmaschine befindet und die Ansaugluft durch Verwendung einer Abgasenergie auflädt;
eine Abgassystemkapazitätsänderungseinheit (10), die so konfiguriert ist, dass sie eine Abgassystemkapazität ändert, die eine Summe einer Kapazität eines Abgaskrümmers und einer Kapazität eines Raums, der mit dem Abgaskrümmer der Verbrennungskraftmaschine verbunden ist, darstellt;
eine Abgasreinigungsvorrichtung (30), die sich an einer Stromabwärtsseite des Turboladers (14) befindet und das Abgas der Verbrennungskraftmaschine reinigt;
einen Abgasrückführungspfad (16), der die Abgasseite an einer Stromaufwärtsseite , des Turboladers (14) mit der Ansaugseite verbindet und einen Teil des Abgases zu dem Ansaugpfad strömen lässt;
eine Ventilöffnungssteuerungseinheit (10), die so konfiguriert ist, dass sie einen Öffnungsgrad eines Drosselventils (19) steuert, das sich in einem Ansaugpfad der Verbrennungskraftmaschine befindet; und
eine Luft-/Kraftstoff-Verhältnissteuerungseinheit (10), die so konfiguriert ist, dass sie ein Luft-/Kraftstoffverhältnis abhängig von einem Antriebszustand der Verbrennungskraftmaschine steuert,
wobei die Ventilöffnungssteuerungseinheit (10) den Öffnungsgrad des Drosselventils (19) einstellt, so dass der Öffnungsgrad des Drosselventils (19) erhöht wird, abhängig von einer Verringerung einer Ansaugluftmenge aufgrund einer Verringerung der Ladeeffizienz des Turboladers (14), was durch eine Erhöhung der Abgassystemkapazität verursacht wird, wenn die Luft-/Kraftstoff Verhältnissteuerungseinheit (10) das Luft-/Kraftstoffverhältnis fett macht und die Abgassystemkapazitätsänderungseinheit (10) die Abgassystemkapazität während eines Erholungsvorgangs der Abgasreinigungsvorrichtung (30) erhöht,
wobei die Abgassystemkapazitätsänderungseinheit (10) ein Isolationsventil (163) ist, das sich in der Nähe eines Abgaseinlasses des Abgasrückführungspfads (16) befindet.

2. Steuervorrichtung für die Verbrennungskraftmaschine nach Anspruch 1, wobei die Abgassystemkapazitätsänderungseinheit (10) die Abgassystemkapazität durch Ändern eines Verbindungsstatus des Abgasrückführungspfads (16) ändert.

3. Steuervorrichtung für die Verbrennungskraftmaschine nach einem der Ansprüche 1 oder 2, ferner aufweisend eine Ladeeffizienzsteuerungseinheit (10), die konfiguriert ist, die Ladeeffizienz des Turboladers (14) zu steuern, wobei die Luft-/Kraftstoffverhältnissteuerungseinheit (10) das Luft-/Kraftstoffverhältnis der Verbrennungskraftmaschine fett macht und die Ladeeffizienzsteuerungseinheit (10) die Ladeeffizienz des Turboladers (14) verringert.

4. Steuervorrichtung für die Verbrennungskraftmaschine nach einem der Ansprüche 1 bis 3, ferner aufweisend:
eine Reinigungsfähigkeitserkennungseinheit (10), die so konfiguriert ist, dass sie eine Abgasreinigungsfähigkeit der Abgasreinigungsvorrichtung (30) erkennt,
wobei die Luft-/Kraftstoffverhältnissteuerungseinheit (10) das Luft-/Kraftstoffverhältnis der Verbrennungskraftmaschine abhängig von einem Erkennungsergebnis der Reinigungsfähigkeitserkennungseinheit (10) fett macht.

## Revendications

1. Dispositif de commande pour un moteur à combustion interne comprenant :
un turbocompresseur (14) placé d'un côté d'échappement dans le moteur à combustion interne et turbocompressant l'air d'admission en utilisant l'énergie du gaz d'échappement ;
une unité de changement de capacité de système d'échappement (10) configurée pour changer une capacité de système d'échappement qui est une somme d'une capacité d'un distributeur d'échappement et d'une capacité d'un espace communiquant avec le distributeur d'échappement du moteur à combustion interne ;
un dispositif de purification d'échappement (30) placé d'un côté aval du turbocompresseur (14), et purifiant le gaz d'échappement du moteur à combustion interne ;
un passage de recirculation de gaz d'échappement (16) faisant communiquer le côté d'échappement au niveau d'un côté amont du turbocompresseur (14) avec le côté d'admission et faisant s'écouler une partie du gaz d'échappement vers le passage d'admission ;
une unité de commande d'ouverture de vanne (10) configurée pour commander un degré d'ouverture d'une vanne des gaz (19) placée dans un passage d'admission du moteur à combustion interne ; et
une unité de commande de rapport air-combustible (10) configurée pour commander un rapport air-combustible en fonction d'un état d'entraînement du moteur à combustion interne,
dans lequel l'unité de commande d'ouverture de vanne (10) règle le degré d'ouverture de la vanne des gaz (19), de telle manière que le degré d'ouverture de la vanne des gaz (19) est augmenté en fonction d'une réduction d'une quantité d'air d'admission due à une réduction de l'efficacité de la turbocompression par le turbocompresseur (14) causée par l'augmentation de la capacité du système d'échappement, quand l'unité de commande de rapport air-combustible (10) rend le rapport air-combustible riche et l'unité de changement de capacité de système d'échappement (10) augmente la capacité du système d'échappement, pendant un processus de régénération du dispositif de purification de gaz d'échappement (30),
dans lequel l'unité de changement de capacité de système d'échappement (10) est une vanne d'isolation (163) placée près d'un orifice d'entrée de gaz d'échappement du passage de recirculation de gaz d'échappement (16).

2. Dispositif de commande pour le moteur à combustion interne selon la revendication 1,
dans lequel l'unité de changement de capacité de système d'échappement (10) change la capacité du système d'échappement en changeant un état de communication du passage de recirculation de gaz d'échappement (16).

3. Dispositif de commande pour le moteur à combustion interne selon l'une quelconque des revendications 1 ou 2, comprenant en outre une unité de commande d'efficacité de turbocompression (10) configurée pour commander l'efficacité de turbocompression du turbocompresseur ( 14),
dans lequel l'unité de commande de rapport air-combustible (10) rend le rapport air-combustible du moteur à combustion interne riche, et l'unité de commande d'efficacité de turbocompression (10) réduit l'efficacité de turbocompression du turbocompresseur (14).

4. Dispositif de commande pour le moteur à combustion interne selon l'une quelconque des revendications 1 à 3, comprenant en outre :
une unité de reconnaissance de capacité de purification (10) configurée pour reconnaitre une capacité de purification de gaz d'échappement du dispositif de purification d'échappement (30),
dans lequel l'unité de commande de rapport air-combustible (10) rend le rapport air-combustible du moteur à combustion interne riche en fonction d'un résultat de reconnaissance de l'unité de reconnaissance de capacité de purification (10).
